# EUROPEAN PATENT APPLICATION

(11) **EP 4 564 164 A1**
(43) Date of publication of application: **04.06.2025**
(21) Application number: 23917193.7
(22) Date of filing: 21.11.2023
(51) Int. Cl.: G06F 9/451

(54) **DISPLAY METHOD BASED ON WEATHER INFORMATION, AND ELECTRONIC DEVICE AND READABLE STORAGE MEDIUM**

(30) Priority: 19.01.2023 CN 202310208284; 13.03.2023 CN 202310273903
(71) Applicant: Huawei Technologies Co., Ltd., Shenzhen, Guangdong 518129 (CN)
(72) Inventor: REN, Guofeng, Shenzhen, Guangdong 518129 (CN)
(74) Representative: Grünecker Patent- und Rechtsanwälte PartG mbB
(86) International application number: PCT/CN2023/132955
(87) International publication number: WO 2024/152725

(57) **Abstract**

In a weather information-based display method, after detecting a screen-off operation triggered by a user, an electronic device obtains, in response to the foregoing operation, a weather animation resource package and weather data at a first moment, and displays a first always on display interface based on the weather data at the first moment and the weather animation resource package. The first always on display interface includes a weather animation at the first moment, and the weather animation matches a weather type. Then, the electronic device may obtain a weather animation, corresponding to a second moment, from the weather animation resource package based on an update interval of the weather animation, and display a second always on display interface. The second always on display interface includes the weather animation corresponding to the second moment. In this way, different animations can be displayed, with a change of time and weather, on an always on display interface of the electronic device, thereby improving user experience.

## Description

This application claims priorities to Chinese Patent Application No. 202310208284.2, filed with the China National Intellectual Property Administration on January 19, 2023, and entitled "WEATHER INFORMATION BASED DISPLAY METHOD", and to Chinese Patent Application No. 202310273903.6, filed with the China National Intellectual Property Administration on March 13, 2023, and entitled "WEATHER INFORMATION BASED DISPLAY METHOD, ELECTRONIC DEVICE, AND READABLE STORAGE MEDIUM", both of which are incorporated herein by reference in their entireties.

### TECHNICAL FIELD

This application relates to the field of intelligent terminal technologies, and in particular, to a weather information based display method, an electronic device, and a readable storage medium.

### BACKGROUND

Always on display (always on display, AOD) is a system function that can still display information such as time and a date after a screen of an electronic device is off. The current always on display function already supports various styles like a multi-color clock, an animation, a custom image and/or text, and the like.

However, forms of the existing styles and animations for the always on display are simple. After a style and an animation are selected, the electronic device usually plays a frame animation with a limited quantity of frames, and the style and the animation do not change with other factors, resulting in simple effect.

### SUMMARY

This application provides a weather information based display method, an electronic device, and a readable storage medium, so that different animations can be displayed, with a change of time and weather, on an always on display interface of the electronic device.

According to a first aspect, an embodiment of this application provides a weather information based display method, including: detecting, by an electronic device, a screen-off operation triggered by a user; obtaining, in response to the operation, a weather animation resource package and weather data at a first moment, where the weather data includes a forecast time point and a weather type; displaying a first always on display interface based on the weather data at the first moment and the weather animation resource package, where the first always on display interface includes a weather animation at the first moment, and the weather animation matches the weather type; obtaining a weather animation, corresponding to a second moment, from the weather animation resource package based on an update interval of the weather animation; and displaying a second always on display interface, where the second always on display interface includes the weather animation corresponding to the second moment.

In the foregoing weather information based display method, after detecting a screen-off operation triggered by a user, an electronic device obtains, in response to the foregoing operation, a weather animation resource package and weather data at a first moment, and displays a first always on display interface based on the weather data at the first moment and the weather animation resource package. The first always on display interface includes a weather animation at the first moment, and the weather animation matches a weather type. Then, the electronic device may obtain a weather animation, corresponding to a second moment, from the weather animation resource package based on an update interval of the weather animation, and display a second always on display interface. The second always on display interface includes the weather animation corresponding to the second moment. In this way, different animations can be displayed, with a change of time and weather, on an always on display interface of the electronic device, thereby improving user experience.

In a possible implementation, the obtaining weather data at a first moment includes: checking whether locally stored weather data is within a validity period; sending a weather data update request to a weather data server when the locally stored weather data is beyond the validity period; and receiving weather data at the first moment sent by the weather data server.

In a possible implementation, the obtaining weather data at a first moment includes: checking whether locally stored weather data is within a validity period; and obtaining the locally stored weather data when the locally stored weather data is within the validity period.

In a possible implementation, the method further includes: sending, in response to an operation on a weather animation resource list page for always on display, a weather animation resource list update request to a theme resource server; receiving a weather animation resource list sent by the theme resource server; displaying the weather animation resource list; and receiving, in response to a selection operation performed by the user on a weather animation resource in the weather animation resource list, a weather animation resource package sent by the theme resource server.

In a possible implementation, the method further includes: receiving special weather data pushed by a weather data server, where the special weather data includes a special weather type and a forecast time period corresponding to the special weather type; and displaying a third always on display interface based on the special weather data and the weather animation resource package, where the third always on display interface includes a weather animation corresponding to a third moment, the weather animation at the third moment matches the special weather type, and the third moment is included in the forecast time period.

In a possible implementation, a moment at which the electronic device receives the special weather data is a fourth moment. The fourth moment is between the first moment and the second moment.

In a possible implementation, the first moment is a moment at which the electronic device detects that the user triggers screen-off; or the first moment is a moment at which the electronic device updates weather data before the user triggers screen-off.

According to a second aspect, this application provides an electronic device. The electronic device has a function of implementing a behavior of the electronic device in the first aspect and the possible implementations of the first aspect. The function may be implemented by hardware, or may be implemented by executing corresponding software by hardware. The hardware or the software includes one or more modules or units corresponding to the foregoing function, for example, a detection module, an obtaining module, and a display module.

According to a third aspect, this application provides an electronic device. The electronic device includes a processor, a memory, an application program, and a computer program. The computer program is stored in the memory, and the computer program includes instructions. When the instructions are executed by the electronic device, the electronic device is enabled to perform the method provided in the first aspect.

It should be understood that technical solutions in the second and third aspects of embodiments of this application are consistent with the technical solution in the first aspect of embodiments of this application, and beneficial effects achieved by the aspects and corresponding feasible implementations are similar. Details are not described again.

According to a fourth aspect, an embodiment of this application provides a computer-readable storage medium. The computer-readable storage medium stores a computer program. When the computer program is run on a computer, the computer is enabled to perform the method provided in the first aspect.

According to a fifth aspect, an embodiment of this application provides a computer program. When the computer program is executed by a computer, the computer program is used to perform the method according to the first aspect.

In a possible design, all or some of the programs in the fifth aspect may be stored in a storage medium encapsulated with a processor, or some or all of the programs may be stored in a memory that is not encapsulated with the processor.

### BRIEF DESCRIPTION OF DRAWINGS

FIG. 1 is a diagram of a structure of an electronic device according to an embodiment of this application;
FIG. 2 is a diagram of a system architecture according to an embodiment of this application;
FIG. 3 is a flowchart of a weather information based display method according to an embodiment of this application;
FIG. 4 is a diagram of an always on display interface of an electronic device 100 according to an embodiment of this application;
FIG. 5A and FIG. 5B are an implementation flowchart of a weather information based display method according to another embodiment of this application;
FIG. 6 is a flowchart of a weather information based display method according to another embodiment of this application;
FIG. 7 is a flowchart of a weather information based display method according to still another embodiment of this application;
FIG. 8 is a flowchart of a weather information based display method according to yet another embodiment of this application;
FIG. 9 is a diagram of a structure of an electronic device according to another embodiment of this application; and
FIG. 10 is a diagram of a structure of an electronic device according to still another embodiment of this application.

### DESCRIPTION OF EMBODIMENTS

Terms used in implementations of this application are only used to explain specific embodiments of this application, but are not intended to limit this application.

An always on display function of an electronic device may support styles like a multi-color clock, an animation, a custom image, and custom text, and the like. The multi-color clock and a background of clock digits can change with time. Inspired by beautiful and changing colors of the sky at different moments, the clock digits may display different colors as time passes.

Table 1 shows features, advantages, and disadvantages of various styles of an always on display interface.

**Table 1**

| Style | Feature | Advantage | Disadvantage |
|---|---|---|---|
| Digital clock | Display of information such as a digital clock, a calendar, and a holiday is supported. | Simple and intuitive | Single color |
| Multi-color clock | A background of clock digits can change with time. Inspired by changing colors of the sky at different moments, a digital clock may display different colors as time passes. | Rich and changeable colors | Predictable effect, and lack of visual experience brought by uncertainty to a user |
| Personalized image | An image or an animation of a predefined style as an always on display theme is supported. | Support for an animation | Fixed frame animation format |
| Custom image | A user is allowed to set and crop an image as an always on display theme. | | |
| Art signature | A user is allowed to customize text and a decoration element as an always on display theme. | | |
| Artistic style | Animations of different artistic styles as always on display themes are supported. | | |
| Watch face clock | A watch face-style clock is supported, where watch hands move along with time, and a watch face background animation is supported. | Support for animation effect | |

It can be learned from Table 1 that forms of the current styles and animations for the always on display are simple. After a style and an animation are selected, a frame animation with a limited quantity of frames is played. For example, in Table 1, except the multi-color clock, other styles for the always on display interface do not change with another factor, and effect is simple. In addition, the multi-color clock changes only with time, and presents different background colors in time phases such as morning, noon, and evening. The effect is predictable, lacking of the visual experience brought by the uncertainty to the user.

Based on the foregoing problem, embodiments of this application provide a weather information based always on display method, so that different animations can be displayed, with a change of time and weather, on an always on display interface of an electronic device.

The weather information based display method provided in embodiments of this application may be applied to an electronic device. The electronic device may be a smartphone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the electronic device is not limited in embodiments of this application.

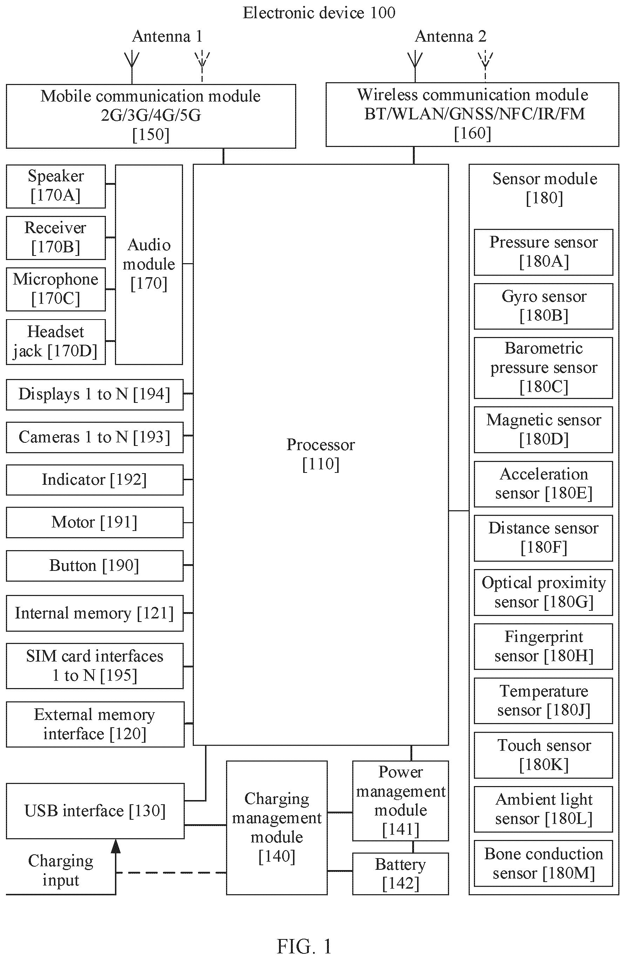

For example, FIG. 1 is a diagram of a structure of an electronic device according to an embodiment of this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing audio through the headset. The interface may be further configured to connect to another electronic device like an AR device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. While charging the battery 142, the charging management module 140 may further supply power to the electronic device 100 by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G/3G/4G/5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application program (such as a sound playback function and an image playback function) required by at least one function, and the like. The data storage area may store data (such as audio data and an address book) and the like that are created during use of the electronic device 100. In addition, the internal memory 121 may include a high-speed random access memory, and may further include a non-volatile memory such as at least one magnetic disk storage device, a flash storage device, or a universal flash storage (UFS). The processor 110 runs instructions stored in the internal memory 121 and/or instructions stored in the memory disposed in the processor, to perform various functional applications and data processing of the electronic device 100.

The electronic device 100 may implement an audio function such as music play and recording through the audio module 170, the speaker 170A, the receiver 170B, the microphone 170C, the headset jack 170D, the application processor, and the like.

The audio module 170 is configured to convert digital audio information into an analog audio signal for output, and is further configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyro sensor 180B may be configured to determine a motion posture of the electronic device 100. In some embodiments, angular velocities of the electronic device 100 around three axes (that is, an x axis, a y axis, and a z axis) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. **In** some embodiments, when the electronic device 100 is a flip phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100, and may detect a magnitude and a direction of gravity when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may use the distance sensor 180F to measure a distance, to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 uses the photodiode to detect infrared reflected light from a nearby object. When detecting sufficient reflected light, the electronic device 100 may determine that there is an object near the electronic device 100. When detecting insufficient reflected light, the electronic device 100 may determine that there is no object near the electronic device 100. The electronic device 100 may use the optical proximity sensor 180G to detect that a user holds the electronic device 100 close to an ear for a call, to automatically perform screen-off for power saving. The optical proximity sensor 180G may also be used in a leather case mode or a pocket mode, to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is lower than another threshold, the electronic device 100 heats the battery 142, to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch control device". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and is located at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may also be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt, and may also be configured to provide a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effects may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

For ease of understanding, with reference to the accompanying drawings and an application scenario, the weather information based display method provided in embodiments of this application is specifically described in the following embodiments of this application by using an electronic device with the structure shown in FIG. 1 as an example.

The method provided in embodiments of this application is applicable to a scenario in which multi-color animation effect is displayed, with a change of time and weather, on an always on display interface of the electronic device 100. In embodiments of this application, a style of the multi-color animation effect displayed on the always on display interface supports a preset resource package and also supports a third-party resource package.

In some examples, the third-party resource package may be made in a resource package specification format, and may be downloaded from a theme market.

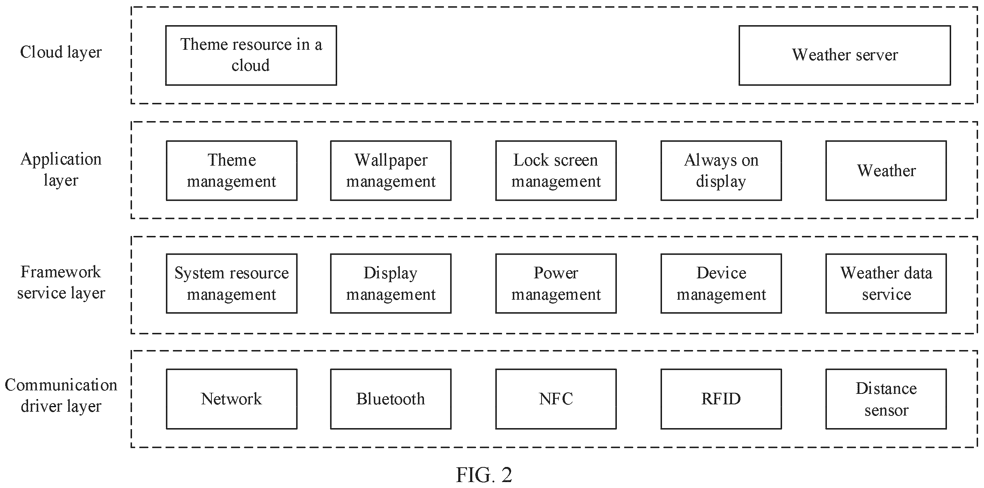

FIG. 2 is a diagram of a system architecture according to an embodiment of this application. As shown in FIG. 2, the system architecture may include a cloud layer, an application layer, a framework service layer, a communication driver layer, and the like.

### (1) Cloud layer

The cloud layer includes a theme resource service and a weather data service. The theme resource service provides an online download function for a multi-color weather animation resource package displayed on an always on display interface. The weather data service provides data of current weather and future weather for multi-color animation effect displayed on the always on display interface.

It should be understood that an electronic device 100 does not need to include the cloud layer. The electronic device 100 may implement a data transmission function with the cloud layer based on the communication driver layer.

### (2) Application layer

The application layer provides core functions to interact with a user, including modules like always on display, theme management, weather, and the like.
(a) The always on display module is a software module built in the electronic device 100, and may be usually a part of lock screen, a settings application (application, APP), or a theme app. In some embodiments, the always on display module may also be referred to as an always on display service or an always on display application. The always on display module is a core functional module for displaying, on the always on display interface, the multi-color animation effect that changes with the weather, and may provide, through an always on display setting interface, a function entry for setting the multi-color animation effect for a user. The always on display module obtains data such as the current weather and the future weather from the weather data service, obtains, from a preset resource or a theme resource, a resource package for the multi-color animation effect that changes with weather and that is displayed on the always on display interface, and generates, based on a change of time and weather, a multi-color animation that changes with a multi-color change and in which effect is distinguished.

The always on display setting interface is an interface provided by the always on display module. The user may modify, on the always on display setting interface, display effect, a display time period, and/or a display style of the always on display interface.

The always on display interface is an interface displayed after a screen of the electronic device 100 is off, and usually includes time. In this embodiment of this application, the multi-color animation effect that changes with time and/or weather may be further displayed.

The always on display function is a system function provided by the electronic device 100, and may still display information such as time and a date after the screen of the electronic device 100 is off. In this embodiment of this application, the multi-color animation effect that changes with time and/or weather is supported.
(b) The theme management module is a software module built in the electronic device 100, and may be usually a part of the theme app or the theme app. The theme management module provides resource management of the multi-color animation effect that changes with weather and that is displayed on the always on display interface, and supports a resource package of a preset style and a third-party resource package.
(c) The weather module is a software module built in the electronic device 100, and may be usually a part of a weather app or a weather app. The weather module provides the weather data service, and provides data such as the current weather and the future weather.
   (3) The framework service layer provides an application programming interface (application programming interface, API) and a programming framework for the application layer.
   (4) The communication driver layer provides a communication capability for requesting data from a service in a cloud and inter-module interaction.

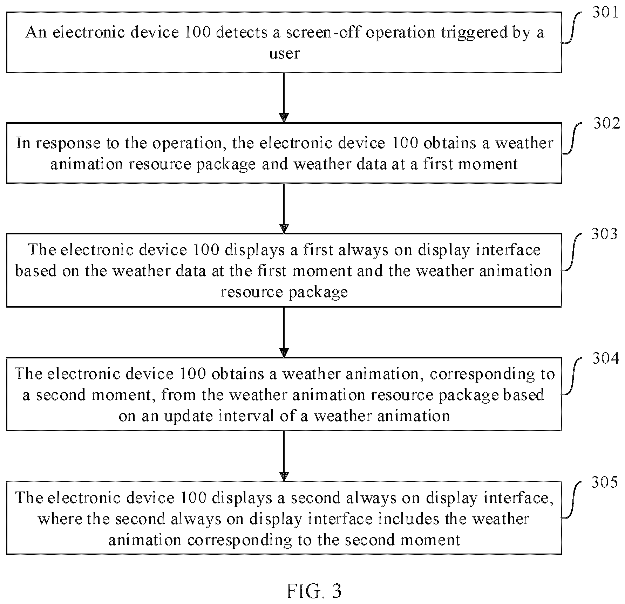

FIG. 3 is a flowchart of a weather information based display method according to an embodiment of this application. As shown in FIG. 3, the weather information based display method may include the following steps.

S301: An electronic device 100 detects a screen-off operation triggered by a user.

In some embodiments, the user may trigger the screen-off operation by pressing a power button of the electronic device 100; or the screen-off operation is triggered when duration in which the user does not operate the electronic device 100 exceeds predetermined duration; or the user triggers the screen-off operation by using a one-click lock screen function. The predetermined duration may be automatically set during specific implementation, and a length of the predetermined duration is not limited in this embodiment.

In some embodiments, the electronic device 100 may detect, through a power management module 141, the screen-off operation triggered by the user.

S302: In response to the operation, the electronic device 100 obtains a weather animation resource package and weather data at a first moment.

In some embodiments, an always on display module in the electronic device 100 starts an always on display service in response to the screen-off operation triggered by the user. Then, a weather application in the electronic device 100 may obtain weather data from a weather data server, and a theme application in the electronic device 100 may obtain a weather animation resource package from a theme resource server.

The first moment may be a moment at which the electronic device 100 detects that the user triggers screen-off; or the first moment may be a moment at which the electronic device 100 updates weather data before the user triggers screen-off. For example, factors such as a response delay and a response error of the electronic device 100, and a time difference between the electronic device 100 and the weather data server exist. In consideration of this, there may be a time difference, for example, within 1 minute or 2 minutes, between the moment at which the electronic device 100 updates the weather data and the moment at which the user triggers screen-off.

S303: The electronic device 100 displays a first always on display interface based on the weather data at the first moment and the weather animation resource package.

The first always on display interface includes a weather animation at the first moment, and the weather animation matches a weather type.

In some embodiments, the always on display module in the electronic device 100 may create, based on the weather data at the first moment and the weather animation resource package, a layout of the always on display interface and the weather animation at the first moment.

The layout of the always on display interface may include a distribution position, on the always on display interface, of an animation corresponding to the weather data, and a distribution position, on the always on display interface, of information like time, a date, a solar term, a holiday and/or like.

In this embodiment, the weather data may include a forecast time point and the weather type. The weather type may be classified into a first-level category and a second-level category. For example, the first-level category may be rain, and the corresponding second-level category may be light rain, moderate rain, heavy rain, and violent rain. The animation corresponding to the weather data may match the time point and the weather type. In some scenarios, the second-level category is supported, so that more vivid and rich animation effect can be displayed on the always on display interface. During specific implementation, if the weather data indicates the moderate rain at 10:00 and the light rain at 11:00, the animation corresponding to the weather data may be an animation for the moderate rain at 10:00 and an animation for the light rain at 11:00.

S304: The electronic device 100 obtains a weather animation, corresponding to a second moment, from the weather animation resource package based on an update interval of the weather animation.

The update interval of the weather animation may be automatically set based on system performance and/or an implementation requirement during specific implementation. A length of the preset update interval is not limited in this embodiment. For example, the preset update interval may be half an hour.

Because the animation corresponding to the weather data matches the time point and the weather type, the weather animation corresponding to the second moment may be obtained from the weather animation resource package based on the update interval of the weather animation. For example, if the current moment is 10:00, and the weather obtained by the electronic device 100 is the moderate rain, an animation corresponding to the current moment is the animation for the moderate rain. If the weather data is updated once at 10:30, and the weather obtained by the electronic device 100 is still the moderate rain, an animation corresponding to 10:30 is still the animation for the moderate rain. If, at 11:00, the weather obtained by the electronic device 100 is the light rain, an animation corresponding to 11:00 is the animation for the light rain.

S305: The electronic device 100 displays a second always on display interface, where the second always on display interface includes the weather animation corresponding to the second moment.

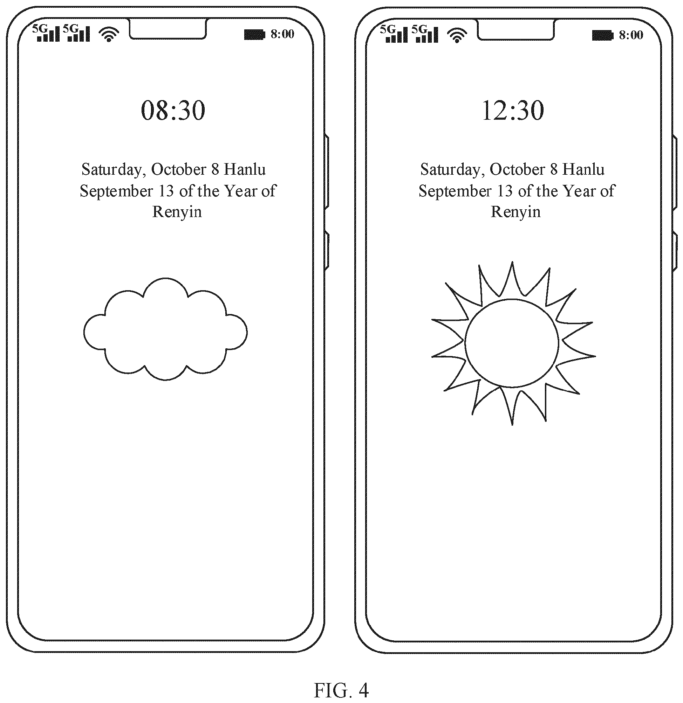

FIG. 4 is a diagram of an always on display interface of an electronic device 100 according to an embodiment of this application. It can be learned from FIG. 4 that animation effect displayed on the always on display interface of the electronic device 100 changes as time and weather change. Specifically, at 8:30, the weather is cloudy, and therefore animation effect for the cloudy weather is displayed on the always on display interface of the electronic device 100. At 12:30, the weather is sunny, and therefore animation effect for the sunny weather is displayed on the always on display interface of the electronic device 100. In addition, a font and/or a text color on the always on display interface may also change as the time and the weather change.

In addition, in this embodiment, after S303, the electronic device 100 may further receive special weather data pushed by a weather data server. The special weather data includes a special weather type and a forecast time period corresponding to the special weather type. The electronic device 100 displays a third always on display interface based on the special weather data and the weather animation resource package. The third always on display interface includes a weather animation corresponding to a third moment, the weather animation at the third moment matches the special weather type, and the third moment may be included in the forecast time period. The special weather type may include a typhoon, a rainstorm, a snowstorm, a cold wave, a strong wind, a sand and dust storm, a high temperature, a drought, thunder and lightning, hail, frost, a dense fog, a haze, road icing, a thundergust, a forest fire, or the like.

For example, it is assumed that a weather forecast indicates that there will be the strong wind from 7:00 to 9:00 on a current day. The weather data server may actively push, to the electronic device 100, weather data "There will be a strong wind from 7:00 to 9:00 today." Then, the electronic device 100 displays the third always on display interface based on the special weather data and the weather animation resource package. The third always on display interface includes the weather animation corresponding to the third moment. In this example, the weather animation corresponding to the third moment matches the strong wind weather type, and the third moment may be a moment in the time period of 7:00 to 9:00.

In addition, a moment at which the electronic device 100 receives the special weather data may be a fourth moment. The fourth moment may be between the first moment and the second moment.

In the foregoing weather information based display method, after detecting a screen-off operation triggered by a user, an electronic device 100 obtains, in response to the foregoing operation, a weather animation resource package and weather data at a first moment, and displays a first always on display interface based on the weather data at the first moment and the weather animation resource package. The first always on display interface includes a weather animation at the first moment, and the weather animation matches a weather type. Then, the electronic device 100 may obtain a weather animation, corresponding to a second moment, from the weather animation resource package based on an update interval of the weather animation, and display a second always on display interface. The second always on display interface includes the weather animation corresponding to the second moment. In this way, different animations can be displayed, with a change of time and weather, on an always on display interface of the electronic device, thereby improving user experience.

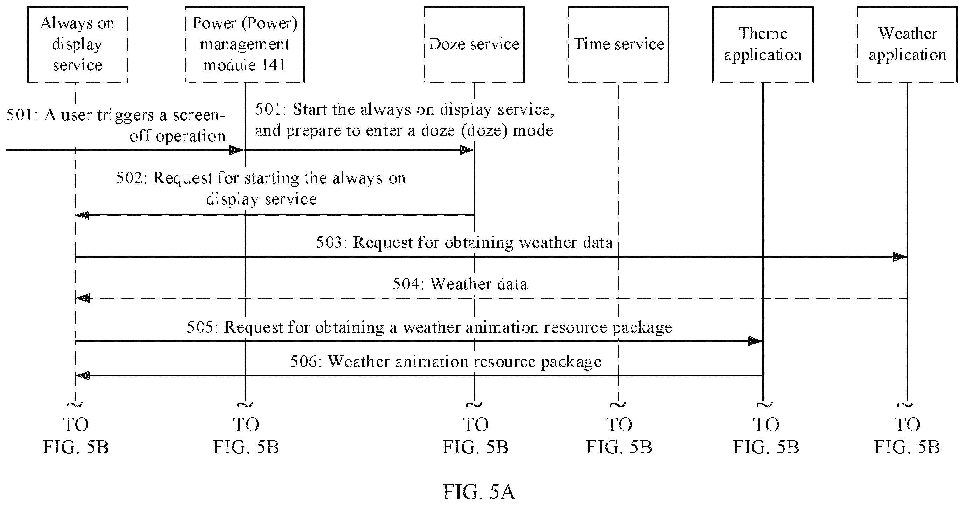

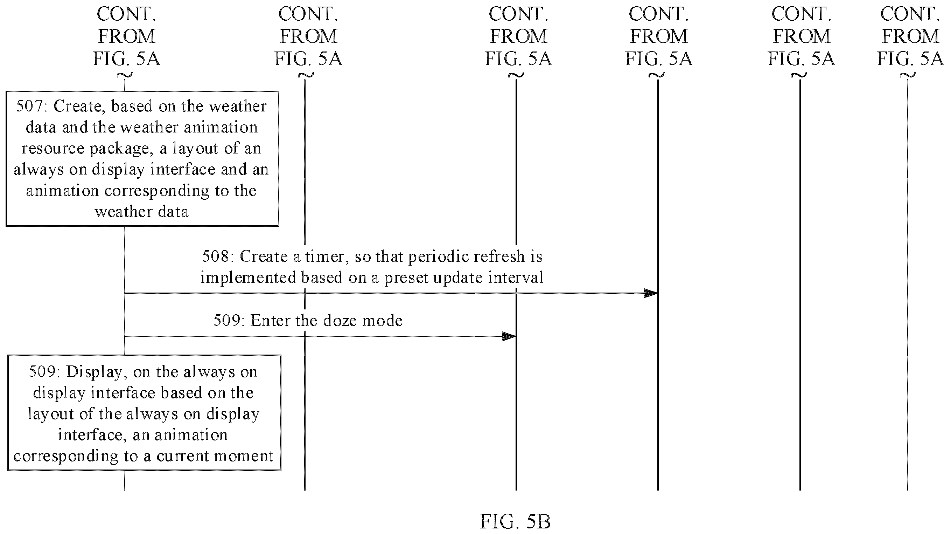

FIG. 5A and FIG. 5B are an implementation flowchart of a weather information based display method according to another embodiment of this application. As shown in FIG. 5A and FIG. 5B, the weather information based display method may include the following steps.

S501: A user triggers a screen-off operation. After detecting the screen-off operation triggered by the user, a power (Power) management module 141 in the electronic device 100 starts an always on display service, and prepares to enter a doze (doze) mode.

S502: A doze service in the electronic device 100 sends, to the always on display service, a request for starting the always on display service.

In some embodiments, after the power management module 141 detects the screen-off operation triggered by the user, the electronic device 100 enters the doze state. In the doze state, the doze service in the electronic device 100 may lower or disable an output of a part of a voltage, so that the electronic device 100 is in a power saving mode, thereby reducing power consumption overheads.

S503: The always on display service in the electronic device 100 sends, to a weather application in the electronic device 100, a request for obtaining weather data.

S504: The weather application returns the weather data to the always on display service.

S505: The always on display service sends, to a theme application in the electronic device 100, a request for obtaining a weather animation resource package.

S506: The theme application returns the weather animation resource package to the always on display service.

It should be noted that S505 and S506 are an optional implementation of this embodiment of this application. In addition, the always on display service may further directly obtain the weather animation resource package from a file system. A manner of obtaining the weather animation resource package is not limited in this embodiment of this application.

S507: The always on display service creates, based on the weather data and the weather animation resource package, a layout of an always on display interface and an animation corresponding to the weather data.

S508: The always on display service interacts with a time service, to create a timer, so that periodic refresh is implemented based on a preset update interval.

S509: The always on display service notifies the doze service to enter the doze mode, and displays, on the always on display interface based on the layout of the always on display interface, an animation corresponding to a current moment.

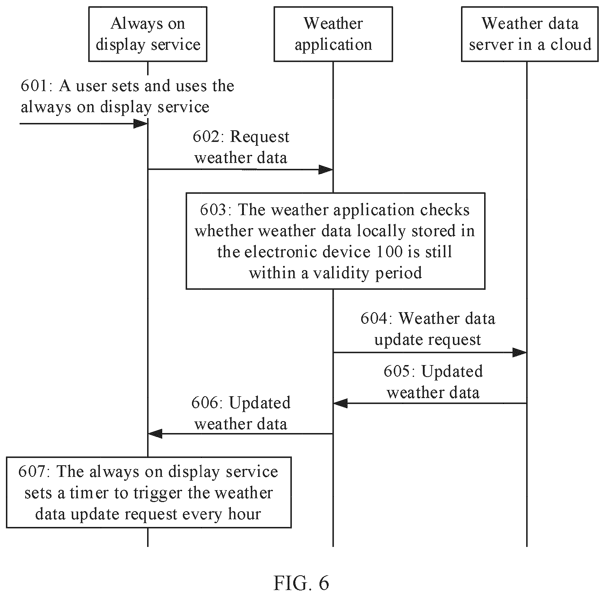

FIG. 6 is a flowchart of a weather information based display method according to another embodiment of this application. In this embodiment, obtaining weather data at a first moment may be: checking, by the electronic device 100, whether locally stored weather data is within a validity period; sending a weather data update request to a weather data server when the locally stored weather data is beyond the validity period; and receiving weather data at the first moment sent by the weather data server. In addition, in this embodiment, when the weather data is obtained, the weather data may be periodically obtained. For example, the weather data may be obtained once every hour. The following uses 1 hour as an example, but is not limited thereto. A periodicity for obtaining the weather data may also be 5 minutes, 10 minutes, 20 minutes, 30 minutes, or the like.

Specifically, as shown in FIG. 6, obtaining the weather data may include the following steps.

S601: An always on display service in the electronic device 100 obtains a request for setting and using the always on display service by a user.

S602: The always on display service requests weather data from a weather application in the electronic device 100.

S603: The weather application checks whether weather data locally stored in the electronic device 100 is within a validity period. If the weather data locally stored in the electronic device 100 is beyond the validity period, S604 is performed.

In addition, if the weather data locally stored in the electronic device 100 is within the validity period, the weather application may return the locally stored weather data to the always on display service.

The validity period may correspond to the periodicity for obtaining the weather data. The validity period may be set based on system performance and/or an implementation requirement during specific implementation. This embodiment does not limit a length of the validity period. For example, the validity period may be half an hour.

That is, after receiving the request from the always on display service, the weather application may obtain an obtaining moment of the weather data locally stored in the electronic device 100, and then calculate duration between the obtaining moment and a current moment. If the duration is less than or equal to the validity period, the weather application may determine that the weather data locally stored in the electronic device 100 is within the validity period. If the duration is greater than the validity period, the weather application may determine that the weather data locally stored in the electronic device 100 is beyond the validity period.

S604: The weather application initiates a weather data update request to a weather data server in a cloud.

S605: The weather application receives updated weather data sent by the weather data server in the cloud.

S606: The weather application returns the updated weather data to the always on display service.

S607: The always on display service sets a timer to trigger the weather data update request every hour.

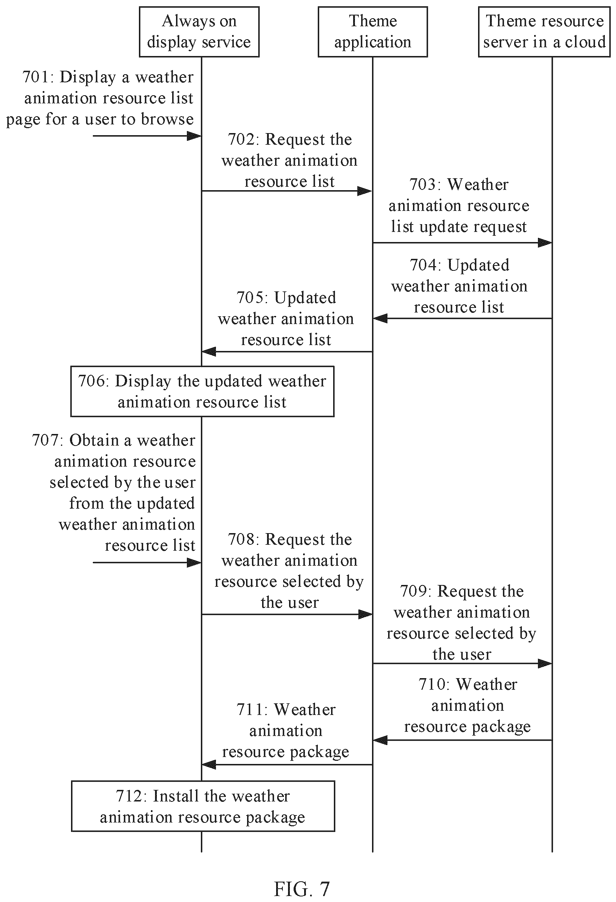

FIG. 7 is a flowchart of a weather information based display method according to still another embodiment of this application. As shown in FIG. 7, a method for obtaining a weather animation resource package is further provided in this embodiment of this application. The method may include the following steps.

S701: An always on display service in the electronic device 100, in response to an operation of opening a weather animation resource list page by a user, displays the weather animation resource list page for the user to browse.

In some embodiments, the weather animation resource list page may be connected to a settings app or a theme app. The weather animation resource list page may include preview animations, images, and text prompts of weather animation resources corresponding to different weather types. The weather animation resource list page may further include a download button of the weather animation resource.

S702: The always on display service requests the weather animation resource list from the theme application in the electronic device 100.

S703: The theme application sends, to a theme resource server in a cloud, a weather animation resource list update request.

S704: The theme application receives an updated weather animation resource list sent by the theme resource server.

S705: The theme application returns the updated weather animation resource list to the always on display service.

S706: The always on display service displays the updated weather animation resource list to the user.

S707: The always on display service obtains a weather animation resource selected by the user from the updated weather animation resource list.

In some embodiments, after browsing the preview animations and images of the weather animation resources in the updated weather animation resource list, the user may tap the download button of the selected weather animation resource. After detecting an operation of tapping the download button by the user, the always on display service may obtain the weather animation resource selected by the user from the updated weather animation resource list.

S708: The always on display service requests, from the theme application, the weather animation resource selected by the user.

S709: The theme application requests, from the theme resource server in the cloud, the weather animation resource selected by the user.

S710: The theme application receives a weather animation resource package sent by the theme resource server in the cloud.

S711: The theme application returns the weather animation resource package to the always on display service.

S712: The always on display service installs the weather animation resource package.

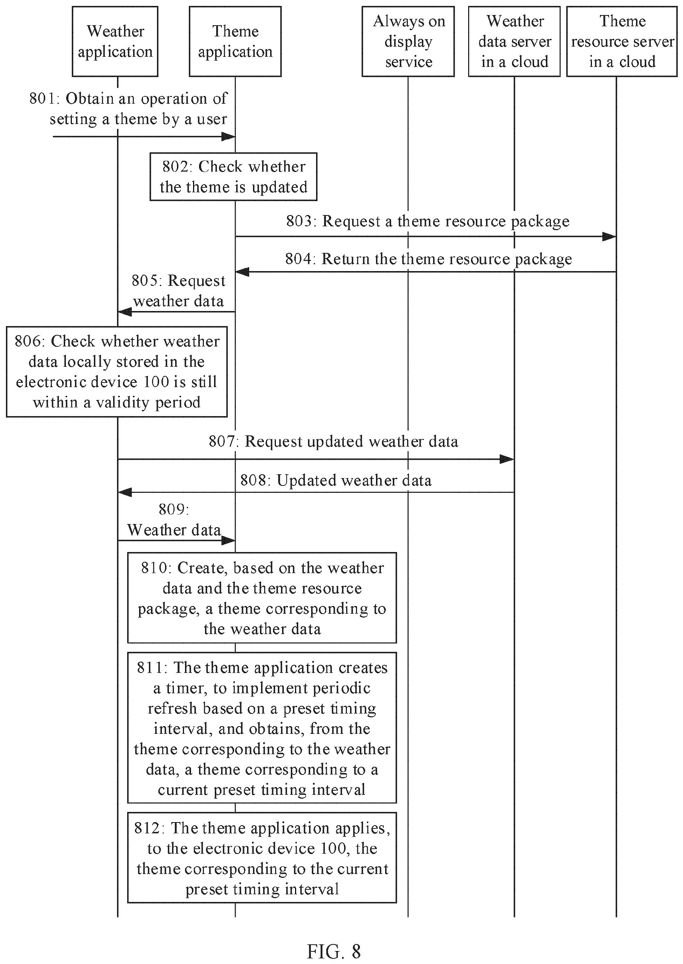

FIG. 8 is a flowchart of a weather information based display method according to yet another embodiment of this application. In this embodiment, a theme of an electronic device 100 may also change as time and weather change. The theme includes but is not limited to the following appearance elements:
(1) Theme style: a style of a wallpaper, an icon, a font, and/or the like in the electronic device 100;
(2) Theme color: a color style of a theme, a color of an element, and/or the like in the electronic device 100;
(3) Wallpaper style: a style of a wallpaper in the electronic device 100, including a style of a wallpaper used on a home screen and/or a lock screen interface;
(4) Icon style: a style of an icon of each application in the electronic device 100;
(5) Lock screen style: a style of a lock screen interface in the electronic device 100;
(6) Always on display style: a style of an always on display interface in the electronic device 100; and
(7) Ringtone style: a ringtone used when the electronic device 100 receives a call, a message, and/or a prompt.

As shown in FIG. 8, the weather information based display method may include the following steps.

S801: A theme application in the electronic device 100 obtains an operation of setting a theme by a user.

S802: The theme application checks whether the theme is updated. If the theme is not updated, S805 is performed. If the theme is updated, S803 is performed.

Specifically, the theme application may check whether a version of a theme locally stored in the electronic device 100 is the latest. If the version of the theme is not the latest, the theme application may determine that the theme is updated. On the contrary, if the version of the theme locally stored is the latest, the theme application may determine that the theme is not updated.

S803: The theme application requests a theme resource package from a theme resource server in a cloud.

In this embodiment, the theme resource package on the theme resource server is made by a designer according to a specification and then uploaded to the theme resource server.

S804: The theme resource server in the cloud returns the theme resource package to the theme application.

S805: The theme application requests weather data from a weather application in the electronic device 100.

S806: The weather application checks whether weather data locally stored in the electronic device 100 is within a validity period. If the weather data locally stored in the electronic device 100 is not within the validity period, S807 is performed. If the weather data locally stored in the electronic device 100 is within the validity period, S809 is performed.

For an implementation in which the weather application checks whether the locally stored weather data is still within the validity period, refer to the description of S603 in the embodiment shown in FIG. 6 of this application. Details are not described herein again.

S807: The weather application requests updated weather data from a weather data server in the cloud.

S808: The weather application receives the updated weather data sent by the weather data server in the cloud.

S809: The weather application returns the weather data to the theme application.

S810: The theme application creates, based on the weather data and the theme resource package, a theme corresponding to the weather data.

S811: The theme application creates a timer, to implement periodic refresh based on a preset update interval, and obtains, from the theme corresponding to the weather data, a theme corresponding to a current moment.

S812: The theme application applies, to the electronic device 100, the theme corresponding to the current moment.

It can be understood that some or all of the steps or operations in the foregoing embodiments are merely examples, and other operations or variants of various operations may be further performed in this embodiment of this application. In addition, the steps may be performed in a sequence different from that presented in the foregoing embodiments, and not all operations in the foregoing embodiments may need to be performed.

It may be understood that, to implement the foregoing functions, the electronic device includes corresponding hardware and/or software modules for performing the functions. With reference to algorithm steps of examples described in embodiments disclosed in this application, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules according to the foregoing method embodiments. For example, each function module may be obtained through division based on each corresponding function, or two or more functions may be integrated into one module. The integrated module may be implemented in a form of hardware. It should be noted that module division in this embodiment is an example and is merely logical function division. In actual implementation, there may be another division manner.

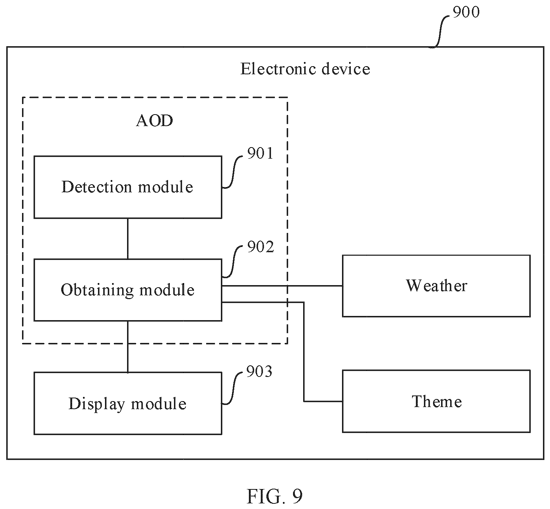

FIG. 9 is a diagram of a structure of an electronic device according to another embodiment of this application. When each functional module is obtained through division for each corresponding function, FIG. 9 is a diagram of a possible composition of the electronic device 900 in the foregoing embodiments. As shown in FIG. 9, the electronic device 900 may include a detection module 901, an obtaining module 902, and a display module 903.

The detection module 901 is configured to detect a screen-off operation triggered by a user.

The obtaining module 902 is configured to obtain, in response to the operation, a weather animation resource package and weather data at a first moment. The weather data includes a forecast time point and a weather type.

The display module 903 is configured to display a first always on display interface based on the weather data at the first moment and the weather animation resource package. The first always on display interface includes a weather animation at the first moment, and the weather animation matches the weather type.

The obtaining module 902 is further configured to obtain a weather animation, corresponding to a second moment, from the weather animation resource package based on an update interval of the weather animation.

The display module 903 is further configured to display a second always on display interface. The second always on display interface includes the weather animation corresponding to the second moment.

In this embodiment, the detection module 901 and the obtaining module 902 may implement an always on display (AOD) function of the electronic device 900.

It should be noted that all related content of the steps in the method embodiment shown in FIG. 3 in this application may be cited in function description of corresponding function modules. Details are not described herein again.

The electronic device 900 provided in this embodiment is configured to perform the weather information based display method provided in the embodiment shown in FIG. 3 in this application, and therefore can achieve effect that is the same as or similar to that of the foregoing method.

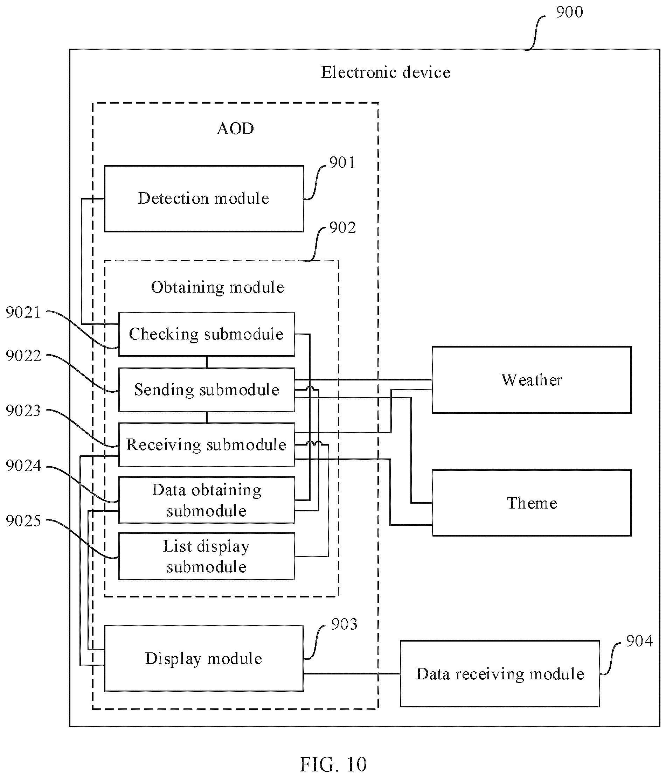

FIG. 10 is a diagram of a structure of an electronic device according to still another embodiment of this application. Compared with the electronic device shown in FIG. 9, a difference lies in that in the electronic device shown in FIG. 10, the obtaining module 902 may include a checking submodule 9021, a sending submodule 9022, and a receiving submodule 9023.

The checking submodule 9021 is configured to check whether locally stored weather data is within a validity period.

The sending submodule 9022 is configured to send a weather data update request to a weather data server when the locally stored weather data is beyond the validity period.

The receiving submodule 9023 is configured to receive weather data at the first moment sent by the weather data server.

In some embodiments, the obtaining module 902 may further include a data obtaining submodule 9024.

The data obtaining submodule 9024 is configured to obtain the locally stored weather data when the locally stored weather data is within the validity period.

In this embodiment, the obtaining module 902 is specifically configured to periodically obtain the weather data.

In some embodiments, the obtaining module 902 may include a sending submodule 9022, a receiving submodule 9023, and a list displaying submodule 9025.

The sending submodule 9022 is configured to send, in response to an operation on a weather animation resource list page for always on display, a weather animation resource list update request to a theme resource server.

The receiving submodule 9023 is configured to receive a weather animation resource list sent by the theme resource server.

The list displaying submodule 9025 is configured to display the weather animation resource list.

The receiving submodule 9023 is further configured to receive, in response to a selection operation performed by the user on a weather animation resource in the weather animation resource list, a weather animation resource package sent by the theme resource server.

Further, the electronic device 900 may further include a data receiving module 904.

The data receiving module 904 is configured to receive special weather data pushed by a weather data server. The special weather data includes a special weather type and a forecast time period corresponding to the special weather type.

The display module 903 is further configured to display a third always on display interface based on the special weather data and the weather animation resource package. The third always on display interface includes a weather animation corresponding to a third moment, the weather animation at the third moment matches the special weather type, and the third moment is included in the forecast time period.

A moment at which the data receiving module 904 receives the special weather data is a fourth moment. The fourth moment is between the first moment and the second moment.

It should be noted that all related content of the steps in the method embodiments shown in FIG. 3 to FIG. 8 in this application may be cited in function description of corresponding function modules. Details are not described herein again.

The electronic device 900 provided in this embodiment is configured to perform the weather information based display method provided in the embodiments shown in FIG. 3 to FIG. 8 in this application, and therefore can achieve effect that is the same as that of the foregoing method.

It should be understood that the electronic device 900 may correspond to the electronic device 100 shown in FIG. 1. Functions of the sending submodule 9022 and the receiving submodule 9023 may be implemented by the processor 110, the antenna 1, and the mobile communication module 150 in the electronic device 100 shown in FIG. 1, and/or by the processor 110, the antenna 2, and the wireless communication module 160. Functions of the display module 903 may be implemented by the processor 110 and the display 194 in the electronic device 100 shown in FIG. 1. Functions of other modules in the electronic device 900 may be implemented by the processor 110 in the electronic device 100 shown in FIG. 1.

When an integrated unit is used, the electronic device 900 may include a processing module, a storage module, and a communication module.

The processing module may be configured to control and manage actions of the electronic device 900, for example, may be configured to support the electronic device 900 in performing the steps performed by the foregoing modules. The storage module may be configured to support the electronic device 900 in storing program code, data, and the like. The communication module may be configured to support the electronic device 900 in communicating with another device.

The processing module may be a processor or a controller, and may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor, and the storage module is a memory, the electronic device 900 in this embodiment may be a device having the structure shown in FIG. 1.

An embodiment of this application further provides a computer-readable storage medium. The computer-readable storage medium stores a computer program. When the computer program is run on a computer, the computer is enabled to perform the method provided in the embodiments shown in FIG. 3 to FIG. 8 in this application.

An embodiment of this application further provides a computer program product. The computer program product includes a computer program. When the computer program is run on a computer, the computer is enabled to perform the method provided in the embodiments shown in FIG. 3 to FIG. 8 in this application.

In embodiments of this application, "at least one" refers to one or more, and "a plurality of" refers to two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items" and a similar expression thereof refer to any combination of these items, including a single item or any combination of plural items. For example, at least one item of a, b, or c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software function unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A weather information based display method, comprising:
detecting, by an electronic device, a screen-off operation triggered by a user;
obtaining, in response to the operation, a weather animation resource package and weather data at a first moment, wherein the weather data comprises a forecast time point and a weather type;
displaying a first always on display interface based on the weather data at the first moment and the weather animation resource package, wherein the first always on display interface comprises a weather animation at the first moment, and the weather animation matches the weather type;
obtaining a weather animation, corresponding to a second moment, from the weather animation resource package based on an update interval of the weather animation; and
displaying a second always on display interface, wherein the second always on display interface comprises the weather animation corresponding to the second moment.

2. The method according to claim 1, wherein the obtaining weather data at a first moment comprises:
checking whether locally stored weather data is within a validity period;
sending a weather data update request to a weather data server when the locally stored weather data is beyond the validity period; and
receiving weather data at the first moment sent by the weather data server.

3. The method according to claim 1, wherein the obtaining weather data at a first moment comprises:
checking whether locally stored weather data is within a validity period; and
obtaining the locally stored weather data when the locally stored weather data is within the validity period.

4. The method according to claim 1, wherein the method further comprises:
sending, in response to an operation on a weather animation resource list page for always on display, a weather animation resource list update request to a theme resource server;
receiving a weather animation resource list sent by the theme resource server;
displaying the weather animation resource list; and
receiving, in response to a selection operation performed by the user on a weather animation resource in the weather animation resource list, a weather animation resource package sent by the theme resource server.

5. The method according to claim 1, wherein the method further comprises:
receiving special weather data pushed by a weather data server, wherein the special weather data comprises a special weather type and a forecast time period corresponding to the special weather type; and
displaying a third always on display interface based on the special weather data and the weather animation resource package, wherein the third always on display interface comprises a weather animation corresponding to a third moment, the weather animation at the third moment matches the special weather type, and the third moment is comprised in the forecast time period.

6. The method according to claim 5, wherein a moment at which the electronic device receives the special weather data is a fourth moment, and the fourth moment is between the first moment and the second moment.

7. The method according to claim 1, wherein the first moment is a moment at which the electronic device detects that the user triggers screen-off; or the first moment is a moment at which the electronic device updates weather data before the user triggers screen-off.

8. An electronic device, wherein the electronic device comprises:
a detection module, configured to detect a screen-off operation triggered by a user;
an obtaining module, configured to obtain, in response to the operation, a weather animation resource package and weather data at a first moment, wherein the weather data comprises a forecast time point and a weather type; and
a display module, configured to display a first always on display interface based on the weather data at the first moment and the weather animation resource package, wherein the first always on display interface comprises a weather animation at the first moment, and the weather animation matches the weather type, wherein
the obtaining module is further configured to obtain a weather animation, corresponding to a second moment, from the weather animation resource package based on an update interval of the weather animation; and
the display module is further configured to display a second always on display interface, and the second always on display interface comprises the weather animation corresponding to the second moment.

9. An electronic device, wherein the electronic device comprises a processor, a memory, and a computer program, the computer program is stored in the memory, the computer program comprises instructions, and when the instructions are executed by the electronic device, the electronic device is enabled to perform the method according to any one of claims 1 to 7.

10. A computer-readable storage medium, wherein the computer-readable storage medium stores a computer program, and when the computer program is run on a computer, the computer is enabled to perform the method according to any one of claims 1 to 7.
